# EUROPEAN PATENT SPECIFICATION

(11) **EP 2 042 414 B1**
(45) Date of publication and mention of the grant of the patent: **01.12.2010**
(21) Application number: 08160063.7
(22) Date of filing: 10.07.2008
(51) Int. Cl.: B62J 1/12, B60K 13/02, B62J 23/00, F02M 35/16

(54) **Motorcycle comprising an air intake port structure**
Motorrad mit einer Lufteinlass-Portstruktur
Motocyclette comportant une structure d'orifice d'admission d'air

(30) Priority: 28.09.2007 JP 2007256624
(43) Date of publication of application: 01.04.2009
(73) Proprietor: HONDA MOTOR CO., LTD., Tokyo 107-8556 (JP)
(72) Inventor: Kodama, Makoto, Saitama 351-0193 (JP); Nishimoto, Akihiko, Saitama 351-0193 (JP); Ota, Yutaka, Saitama 351-0193 (JP); Isomura, Mamoru, Saitama 351-0193 (JP)
(74) Representative: Ilgart, Jean-Christophe

(56) References cited:
- JP-A- 6 299 920
- JP-A- 7 101 371
- JP-A- 10 299 873
- JP-U- 1 060 992

## Description

### Technical Field

The present invention relates to a motorcycle comprising an air intake port structure which introduces air from the lateral sides of the vehicle body into the inside of the body.

### Background Art

A motorcycle which has a gap between its occupant seat and side cover to introduce air into the inside of the body has been known (for example, JP 1060992 U, JP 7101371 A and JP 10299873 A). The air thus introduced is used to resolve the problem of heat accumulation under the seat or supplied to an air cleaner located inside the body.

### Disclosure of the Invention

However, the gap is made based on the assemblability of the seat and side cover and it is hard for air to be taken in through it. Particularly if air is to be supplied to the air cleaner inlet port, enough amounts of inlet air can not be secured.

The present invention has been made in view of the above circumstances and has an object to provide a motorcycle comprising an air intake port structure which permits more air to be introduced from between the seat and side covers.

In order to solve the above problem, the present invention, having its preambule based on document JP 1 060 992 U is defined in claim 1. Preferred features are disclosed in the dependent claims.

According to this constitution, the slit as an opening to introduce enough air can be formed larger and the guide ribs can guide the air being introduced to the inner side of the side cover.

In the above constitution, it may be that an air cleaner is provided with both its two lateral sides surrounded by the side covers and an air intake path from the slit to an air cleaner's inlet port has a labyrinth structure.

Also it may be that the seat has a seat bottom plate barrier extending downward from a seat's bottom plate, the air cleaner has an air cleaner inlet port barrier extending upward from the air cleaner, and the seat bottom plate barrier and the air cleaner inlet port barrier constitute the labyrinth structure.

Furthermore, it may be that while the seat bottom plate barrier is located more inward in the body width direction than the guide part, the air cleaner inlet port barrier is located more inward in the body width direction than the seat bottom plate barrier and so formed as to surround the air cleaner's inlet port.

In the above constitution, as the air introduced through the slit passes through the labyrinth structure, the dust and moisture contained in the air are reduced.

In the present invention, since an upper concave part as the seat's lower edge recessed upward and a lower concave part as the side cover's top recessed downward constitute a slit to introduce air, a guide part formed integrally with the side cover's top is provided on the slit's inner side in the body and the guide ribs to guide air from the slit to the side cover's inner side is formed on the guide part, the slit as an opening to introduce air can be formed larger and enough air can be introduced into the inner side of the side cover. Also, since the air being introduced is guided by the guide ribs, the introduced air can be sent to a specified place such as the air cleaner inlet port.

In addition, since an air cleaner is provided with both its sides surrounded by the side covers and an air intake path from the slit to the air cleaner's inlet port has a labyrinth structure, the dust and moisture in the air are reduced in advance in the area from the slit to the air cleaner inlet port. Consequently, the air to be supplied to the air cleaner is cleaned in advance and the cleaning or replacement period of an air filter or the like in the air cleaner is lengthened.

### Brief Description of the Drawings

Fig. 1 is a side view of a motorcycle with an air intake port structure according to an embodiment of the present invention.
Fig. 2 is a front view of the motorcycle as seen from in front of it.
Fig. 3 is a perspective view of a left rear area of the motorcycle with the seat removed, as seen obliquely from above.
Fig. 4 is an enlarged side view showing an area where the air clearer is attached.
Fig. 5 is a perspective view showing the side covers and air cleaner.
Fig. 6 is a sectional view of the motorcycle's portion including the slit.

### Best Mode for Carrying Out the Invention

Next, an embodiment of the present invention will be described referring to the accompanying drawings. In the explanation below, direction-related words such as "front", "rear (back)", "left", "right", "up (or above)" and "down (or below)" refer to directions with respect to the vehicle body.

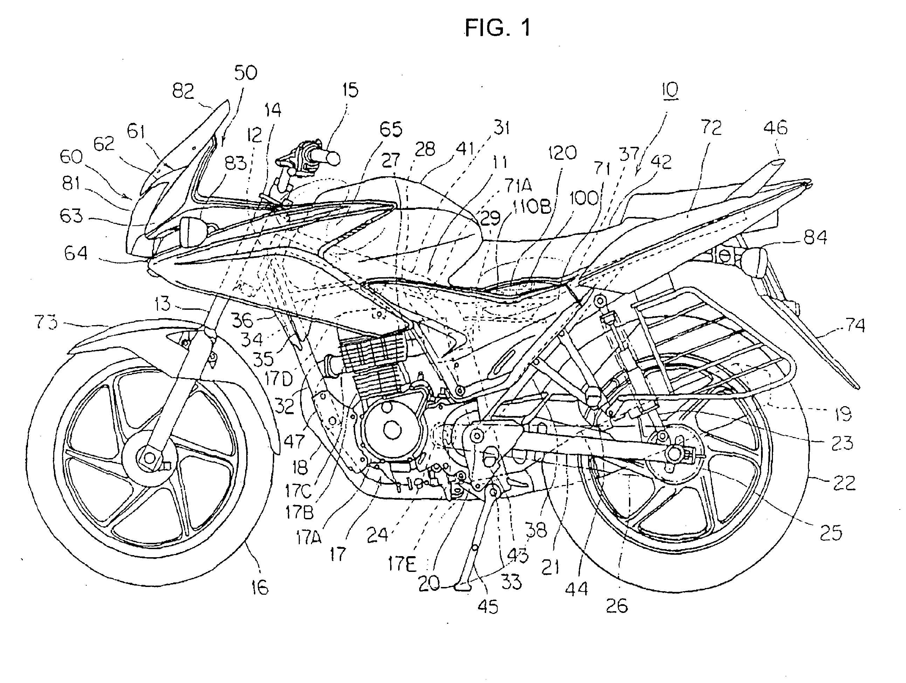

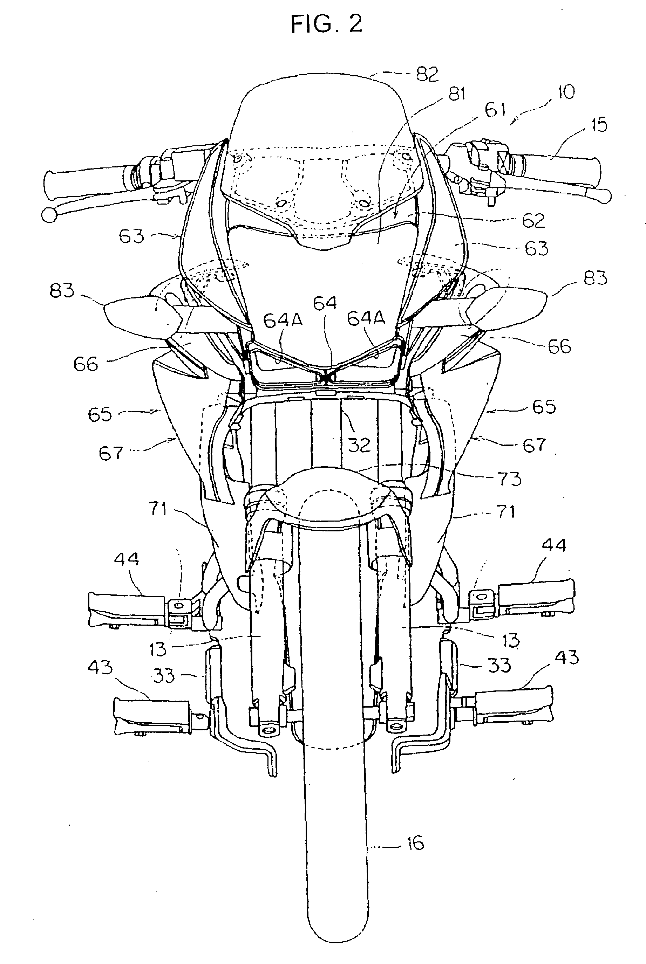

Fig. 1 is a side view of a motorcycle having an air intake port structure according to an embodiment of the present invention and Fig. 2 is a front view of it.

As shown in Fig. 1, the motorcycle 10 includes: a body frame 11; a pair of left and right front forks 13, 13 rotatably supported by a head pipe 12 attached to the front end of the body frame 11; a steering handlebar 15 attached to a top bridge 14 which supports the upper ends of the front forks 13, 13; a front wheel 16 rotatably supported by the front forks 13; an engine 17 supported by the body frame 11; an exhaust muffler 19 coupled with the engine 17 through an exhaust pipe 18; a rear swing arm 21 vertically swingably supported by a pivot 20 on the rear lower part of the body frame 11; and a rear wheel 22 rotatably supported on the rear end of the rear swing arm 21. In addition, a rear cushion 23 is located between the rear swing arm 21 and the body frame 11.

The body frame 11 includes: a main frame 31 which extends rearward from the head pipe 12 and curves and extends rearward and obliquely downward; a down tube 32 which extends rearward from the head pipe 12 obliquely downward under the main frame 31; and a pivot plate 33 having a pivot 20 which is coupled with the rear part of the main frame 31 and supports the rear swing arm 21. In the vicinity of the head pipe 12, a tension pipe 34 is put between the main frame 31 and down tube 32 and a first reinforcing plate 35 which connects the head pipe 12, main frame 31 and down tube 32 and a second reinforcing plate 36 which connects the head pipe 12 and down tube 32 are provided, thereby assuring sufficient rigidity of the front of the body frame 11.

A seat rail 37 is connected in the vicinity of the curved portion of the main frame 31. This seat rail 37 is also supported by a stay 38 coupled with the pivot plate 33. A fuel tank 41 is supported on the main frame 31, located ahead of the seat rail 37, and a seat 42 for an occupant to sit on is supported behind the fuel tank 41.

As shown in Fig. 1, an upper concave part 100, which is the seat 42's lower edge recessed upward, is formed on each side of the seat 42. This upper concave part 100 is formed almost in the center of the seat 42 in the longitudinal (front-rear) direction. More specifically, the upper concave part 100 is formed in such a position that when the rider sits on the seat 42, the rider's leg does not come to the upper concave part 100. The upper concave part 100, in combination with the lower concave part 110B (detailed later) of the side cover 71, forms a slit 120 (see Figs. 1, 6 and 7).

In Figs. 1 and 2, reference numeral 43, 43 denotes a step for the rider on which the rider seated on the front part of the seat 42 rests his/her foot; reference numeral 44, 44 denotes a step for a pillion passenger, foldably attached to the stay 38 supporting the seat rail 37, on which the pillion passenger rests his/her foot; and reference numeral 45 denotes a side stand and reference numeral 46 denotes a grab rail which the pillion passenger grabs.

The engine 17 is located in the space surrounded by the main frame 31 and down tube 32 below the fuel tank 41 near the front of the body. More specifically, the engine 17 is supported by the down tube 32 through an engine mount 47.

The engine 17 includes: a crankcase 17A supported by the pivot plate 33 located on the main frame 31; a cylinder block 17B coupled with the front upper part of the crankcase 17A; a cylinder head 17C coupled with the upper part of the cylinder block 17B; and a head cover 17D coupled with the upper part of the cylinder head 17C.

The engine 17 in this embodiment is an air-cooled single-cylinder engine with air cooling fins provided on the outside of the cylinder block 17B and cylinder head 17C, and it adopts a longitudinal engine layout in which the cylinder block 17B is almost vertical to the crankcase 17A (actually slightly tilted forward).

In the cylinder block 17B, a piston is reciprocably housed in a cylinder. The crankshaft coupled with the piston through a connecting rod and the engine's output shaft 17E are journaled to the crankcase 17A, which also houses a clutch mechanism as a power transmission between the crankshaft and the output shaft 17E, a gear shift mechanism and so on. As shown in Fig. 1, the output shaft 17E and the rear wheel 22 have sprockets 24 and 25 respectively and power of the engine 17 is transmitted through a drive chain 26 wound around these sprockets 24 and 25 to the rear wheel 22.

The exhaust pipe 18 is connected to the front face of the cylinder head 17C. Also a carburetor 28 is coupled with the back face of the cylinder head 17C through an insulator 27 and an air cleaner 29 is connected behind the carburetor 28. The carburetor 28 mixes the fuel supplied from the inside of the fuel tank 41 and the air supplied from the air cleaner 29 and supplies the mixture to the engine 17. Instead of the carburetor system, an injector system may be used.

The motorcycle 10 has a body cover 50 which covers the vehicle body. The body cover 50 includes a front cowl 60 which covers the front of the body, a pair of left and right side covers 71, 71 which cover the lateral sides of the body, and a rear seat cowl 72 which covers the rear of the body, and these are made of adequate materials such as synthetic resin. In addition, a front fender 73 which covers the front wheel 16 is attached to the front fork 13 and a rear fender 74 which covers the rear wheel 22 is attached to the rear seat cowl 72.

The side cover 71 is a large cover which covers the body's lateral side extending from the area below the fuel tank 41 to the area under the seat 42 and virtually takes the shape of a triangle with its apex down, or downward convex. The side cover 71 has a grommet 71A in a position spaced from its front end where the grommet 71A is held by the body frame 11 (main frame 31) below the fuel tank 41 and its front end and rear end are fixed on the body frame 11 (main frame 31) with screws 75, 76. The detailed shape of the side cover 71 will be described later.

The rear seat cowl 72, which is fixed on the seat rail 37, extends along the left and right sides of the seat 42 rearward and upward from near the rear edges of the side covers 71, making a smooth curve extending rearward. This shape improves the appearance of the body and permits the traveling wind from ahead of the body to be smoothly guided rearward along the rear seat cowl 72, reducing the air resistance.

The front cowl 60 includes a front upper cowl 61 which covers the central part of the front of the body, and a pair of left and right front side cowls 65 which are detachably provided on the lateral sides of the front upper cowl 61 and cover the lateral sides of the front part of the body.

The front upper cowl 61 is fixed on the body frame in front of the head pipe 12 through a cowl stay (not shown). As shown in Figs. 1 and 2, a headlight 81 and a screen 82 are located on the front upper cowl 61.

As shown in Figs. 1 and 2, the front upper cowl 61 is formed integrally with: a nose part 62 which curves from its front end obliquely rearward; nose side parts 63, 63 protruding left and right from the nose part 62; and an air intake duct part 64 located below the nose part 62.

In this constitution, as shown in Fig. 1, a pair of left and right winker units 83, 83 is attached to the front parts of the nose side parts 63 and rear winker units 84, 84 are attached to the base of the rear fender 74.

Also, the air intake duct part 64 is located at the front bottom of the front upper cowl 61 and as shown in Fig.2, it has a pair of left and right ducts 64A, 64A which are open forward to introduce the traveling wind from ahead of the body into the space between the pair of left and right front side cowls 65, 65.

As shown in Fig. 1, the front side cowls 65, 65 take the form of a virtually V-shaped cover with the lateral side of the air intake duct part 64 (namely, the front bottom of the front cowl 60) as the apex of the V shape, where the cover is integrally composed of an upper front side cowl part 66 extending upward to the rear and a lower front side cowl part 67 extending downward to the rear.

These upper front side cowl parts 66 and lower front side cowl parts 67 curve rearward from the above apex while gradually protruding toward the lateral side of the body, where they branch into an upper part and a lower part at the front lateral side of the fuel tank 41 and extend rearward, virtually taking the form of a V shape when viewed sideways so that the rear edges of these cowl parts 66, 67 coincide with the contour of a recess in the fuel tank 41's knee grip 41A.

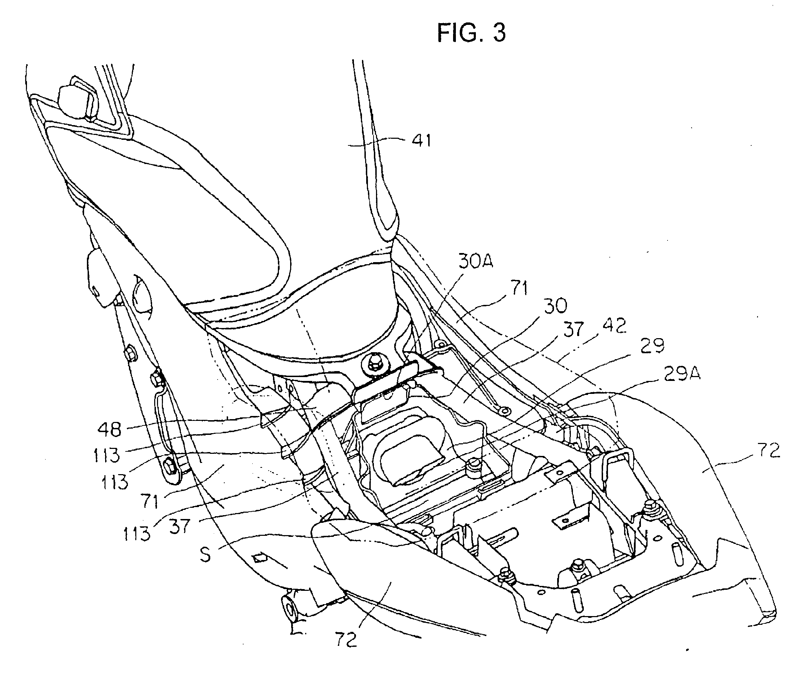

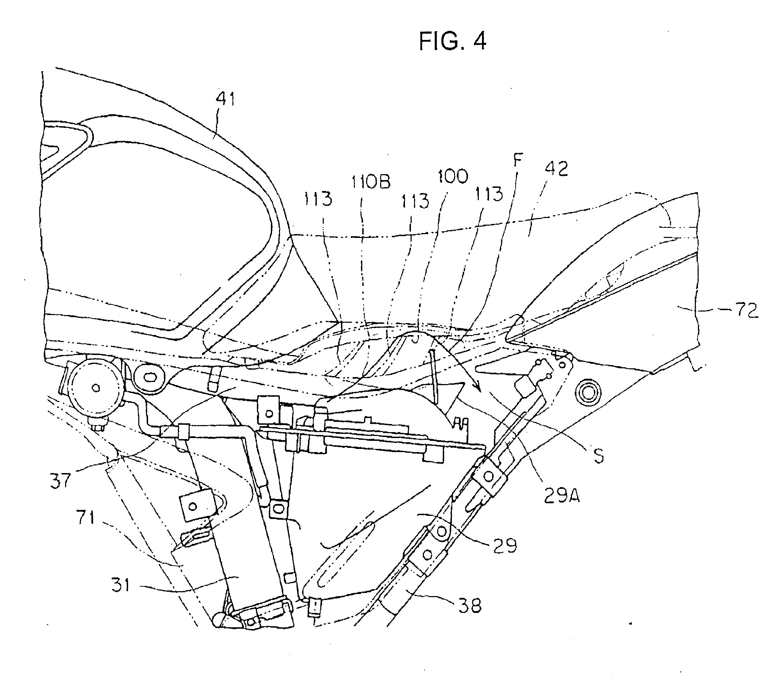

Fig. 3 is a perspective view of a left rear area of the motorcycle as seen obliquely from above, in which the seat 42 is indicated by imaginary line. Fig. 4 is an enlarged side view of an area where the air clearer is attached, in which the side cover of the motorcycle is indicated by an imaginary line.

As shown in Figs. 3 and 4, the air cleaner 29 located in the center of the vehicle width direction and an air intake duct 30 for guiding the air introduced from the air intake duct part 64, located above the air cleaner 29 are provided under the seat 42.

As shown in Fig. 4, the air cleaner 29 is located so as to fit in an almost triangular inner space surrounded by the main frame 31, seat rail 3 and stay 38 and attached to the main frame 31 and the stay 38 through a mounting metal fitting or the like. As shown in Fig. 1, the almost triangular space is covered by the side covers 71 (see Fig. 1) from the outer side of the body to make the carburetor 28 and the air cleaner 29 invisible from outside of the body for better appearance.

As shown in Fig. 4, there is a little distance between the top of the air cleaner 29 and the bottom of the seat 42 in the vertical direction and space S is formed in an upper area of the almost triangular space, surrounded by the air cleaner 29, seat 42 and side covers 71. The air introduced from outside of the vehicle can stay in this space S.

At the top of the air cleaner 29, an inlet port 29A which is open toward the rear of the body is formed facing the space S. The air introduced through this inlet port 29A is filtered by an air filter (not shown) in the air cleaner 29 to remove foreign particles or dust and then sent to the carburetor 28.

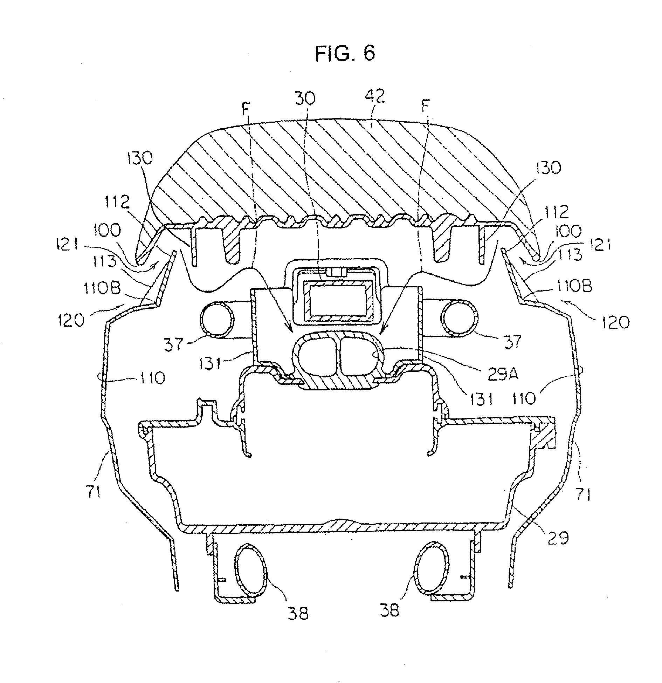

The air intake duct 30 has an air intake port 30A nearer to the front of the vehicle than the inlet port 29A of the air cleaner 29. The air intake duct 30's portion in the vicinity of the air intake port 30A is supported by a cross frame 48 (see Figs. 3 and 6) which transversely connects the left and right seat rails 37, 37. This air intake port 30A is open toward the space S located rearward of the vehicle. Consequently the air introduced through the duct 64A (see Fig. 2) of the air intake duct 64 is sent from the air intake port 30A and supplied into the space S.

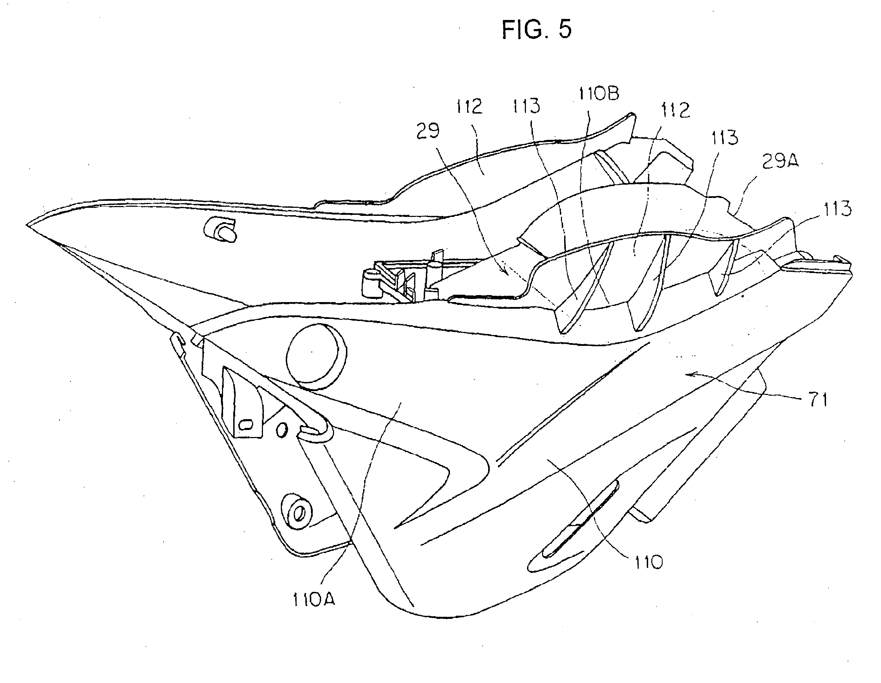

Fig. 5 is a perspective view showing the left and right side covers 71 with the air cleaner 29 located inside these side covers 71. Fig. 6 is a sectional view of the motorcycle 10's portion including the slit 120.

As shown in Fig. 5, each side cover 71 includes a wind sending part 110 which sends the traveling wind toward the rear of the vehicle, and a guide part 112 which is inclined inward of the body from the upper edge of the wind sending part 110 and stands almost upward.

As shown in Fig. 5, the outer surface of the wind sending part 110 is elevated outward of the body in an almost V shape (specifically, a V turned counterclockwise by 90 degrees) to allow the traveling wind flowing along the lateral side of the body to flow smoothly toward the rear of the body. This elevation also improves the external appearance. The surface of a front upper part 110A (upper part of the almost V shape) of the elevated area is gradually inclined toward the guide part 112 so that the traveling wind flowing from the front to the rear concentrates on the guide part 112.

The upper edge of the wind sending part 110 has a lower concave part 110B recessed downward almost in the center of the longitudinal direction of the side cover 71 and the guide part 112 lies on this lower concave part 110B. As shown in Fig. 1, the position of the lower concave part 110B (or guide part 112) almost coincides with the position of the upper concave part 100 of the seat 42. This means that when the seat 42 and side cover 71 are joined, the upper concave part 100 and the lower concave part 110B constitute the groove-like slit 120 which extends in the longitudinal direction of the body, when the motorcycle 10 is viewed from the body side.

The guide part 112 is intended to guide the air flowing in the slit 120 obliquely upward inside the body. This guide part 112 is located more inward in the body width direction than the upper concave part 100 of the seat 42 (see Fig. 6) and there is a gap between the upper part of the guide part 112 and the upper concave part 100 of the seat 42 in the body width direction. This means that this gap forms an opening 121 which communicates with the inside of the body and the air introduced through the slit 120 goes through this opening 121 into the inside of the body.

The guide part 112 extends up to a point above the lower edge of the upper concave part 100 of the seat 42 and functions as a blind member which makes the components inside the body invisible when looked through the slit 120 from outside the body.

As shown in Figs. 4 to 6, three guide ribs 113 are formed on the guide surface of the guide part 112. As shown in Fig. 4, the guide ribs 113 are respectively formed in a way to extend rearward and obliquely upward from the lower concave part 110B when viewed sideways so that the traveling wind F (see Fig. 4) coming from ahead of the body is guided along the direction of extension of the guide ribs 113. The guide ribs 113 are oriented so as not to let the traveling wind F (see Fig. 4) go to the space S directly but to direct it upward once to let it touch the bottom surface of the seat 42, then turn on the bottom surface and flow rearward toward the space S obliquely downward.

On the other hand, since the guide ribs 113 vertically extend along the whole length of the guide part 112, they also have a function to reinforce the guide part 112 in order to increase its bending strength.

The wind sending part 110, guide part 112 and guide ribs 113 are made of plastic material and integrated. Alternatively, depending on the structure, they may be separate members.

Next, the structure of the slit 120 and its vicinity in the body width direction will be explained referring to Fig. 6.

In the air intake path from the slit 120 to the inlet port 29A of the air cleaner 29, a seat bottom plate barrier 130 extending downward from the bottom surface of the seat 42 and an air cleaner inlet port barrier 131 extending upward from the top surface of the air cleaner 29 constitute a labyrinth structure.

The seat bottom plate barrier 130 is formed integrally with a bottom plate constituting the bottom of the seat 42 and located more inward of the body than the guide ribs 113. The lower edge of the seat bottom plate barrier 130 is located vertically in a lower position than the upper edge of the guide part 112. In other words, the guide part 112 and the seat bottom plate barrier 130 also constitute a labyrinth structure in the width direction.

The air cleaner inlet port barrier 131 is located more inward of the body than the seat bottom plate barrier 130 and as shown in Fig. 3, it is formed in a way to cover the inlet port 29A of the air cleaner 29. This air cleaner inlet port barrier 131 is formed integrally with the top of the air cleaner 29. Alternatively it may be separate from the air cleaner 29 and fixed on the top surface of the air cleaner 29 with bolts or the like.

As shown in Fig. 6, in this air intake path,with a labyrinth structure, the traveling wind F coming through the slit 120 passes through the opening 121, hits the seat bottom plate barrier 130 and goes downward before passing in the upper part of the air cleaner inlet port barrier 131 and entering into the inlet port 29A of the air cleaner 29. Since the traveling wind F flows up and down in this way, the dust and moisture contained in the traveling wind F is removed to a certain extent before reaching the inlet port 29A of the air cleaner 29.

In the motorcycle according to the embodiment of the present invention, since the upper concave part 100 as the lower edge of the seat 42 recessed upward and the lower concave part 110B as the top of the side cover 71 recessed downward constitute the slit 120 to introduce air, the air on the sides of the body can be easily taken in from between the seat 42 and the side cover 71 and more air can be introduced into the inside of the body.

In addition, since the guide part 112 integral with the top of the side cover 71 is located on an inner side of the slit 120 in the body, the guide part 112 guides the air coming through the slit 120 inward of the body and upward.

Furthermore, since the guide ribs 113 for guiding the air from the slit 120 toward the inside of the side cover 71 are formed on the guide part 112 and when viewed sideways, the guide ribs 113 extend rearward and obliquely upward from the lower concave part 110B, the traveling wind F does not go to the space S directly but goes upward once and touches the bottom surface of the seat 42, then turns on the bottom surface and flows rearward and obliquely downward to the space S. Consequently the velocity vector of the traveling wind going rearward is decreased and the wind pressure in the space S in the longitudinal direction of the body is weakened, so that the air easily concentrates around the inlet part 29A of the air cleaner 29.

Since in the air intake path from the slit 120 to the inlet port 29A of the air cleaner 29, the seat bottom plate barrier 130 extending downward from the bottom surface of the seat 42 and the air cleaner inlet port barrier 131 extending upward from the top surface of the air cleaner 29 constitute a labyrinth structure, before the traveling wind F coming through the slit 120 enters into the inlet port 29A of the air cleaner 29, the traveling wind F flows up and down and the dust and moisture contained in the traveling wind F is removed to a certain extent. Consequently the amount of dust or the like to be removed by the air cleaner 29 is decreased and the cleaning or replacement period of the air filter or the like in the air cleaner 29 is lengthened.

Furthermore, since the air cleaner inlet port barrier 131 extends upward from the top surface of the air cleaner 29 in a way to surround the inlet port 29A of the air cleaner 29, the dust or the like removed by the labyrinth structure hardly goes into the inlet port 29A of the air cleaner 29.

On the other hand, since the slit 120 is formed in the center of the seat 42 in the longitudinal (front-rear) direction in such a position that when the rider sits on the seat 42, the rider's leg does not cover the slit 120, the traveling wind can be easily taken in through the slit 120 and more air can be introduced.

The embodiment of the present invention has been described so far but various variations or modifications may be made based on the technical idea thereof as described in the appended claims.

For example, in this embodiment, the slit 120 is formed into a grooved shape which extends in the longitudinal direction of the body; however, it may be, for example, vertically long, or circular or rectangular. This means that the motorcycle can be designed with the external appearance as viewed from a lateral side of the body in mind.

In this embodiment, the guide ribs 113 are oriented toward the rear of the body obliquely upward from the lower concave part 110B when viewed sideways; however, if the inlet port 29A of the air cleaner 29 is in a more frontward position than the slit 120, they may be oriented toward the front of the body obliquely upward, namely their orientation may be freely changed depending on the component arrangement. This permits wider design latitude in the arrangement of the air cleaner 29 or the like, making it possible to apply the invention to various types of motorcycles.

## Claims

1. A motorcycle (10) comprising:
an air intake port structure (30)
a seat (42) for an occupant to sit on;
side covers (71) which are located on both lateral sides of the motorcycle and under the seat and covering a body of the motorcycle from outside; and
a slit (120) to introduce air;
wherein a guide part (112) formed integrally with the top of one of said side covers is provided on a slit's inner side;
**characterised in that** an upper concave part (100) which is formed by a seat's lower edge recessed upward and a lower concave part (110B) which is formed by said top of one of said side covers recessed downward constitute said slit (120) to introduce air, with said guide part (112) located more inward in the body width direction of the motorcycle than the upper concave part (100); and **in that**
guide ribs (113) which are adapted to guide air from the slit (120) to a side cover's inner side are formed on the guide part (112).

2. The motorcycle according to Claim 1, wherein an air cleaner (29) is provided with both its two lateral sides surrounded by the side covers (71) and an air intake path from the slit to an air cleaner's inlet port (29A) has a labyrinth structure.

3. The motorcycle according to Claim 2,
wherein: the seat (42) has a seat bottom plate barrier (130) extending downward from a seat's bottom plate;
the air cleaner (29) has an air cleaner inlet port barrier (131) extending upward from the air cleaner; and
the seat bottom plate barrier and the air cleaner inlet port barrier constitute the labyrinth structure.

4. The motorcycle according to Claim 3, wherein while the seat bottom plate barrier (130) is located more inward in the body width direction than the guide part, the air cleaner inlet port barrier (131) is located more inward in the body width direction than the seat bottom plate barrier (130) and so formed as to surround the air cleaner's inlet port.

## Patentansprüche

1. Motorrad (10), umfassend:
- eine Lufteinlasskanalstruktur (30),
- einen Sitz (42) für einen Aufsassen, um sich darauf zu setzen,
- Seitenabdeckungen (71), welche an beiden lateralen Seiten des Motorrades und unter dem Sitz angeordnet sind und welche einen Körper des Motorrades von außen bedecken, und
- einen Schlitz (120), zum Einlassen von Luft,
wobei ein Führungsteil (112), welches integral mit dem oberen Teil von einer von den Seitenabdeckungen gebildet ist, an einer inneren Seite des Schlitzes vorgesehen ist,
**dadurch gekennzeichnet, dass** ein oberes konkaves Teil (100), welches von einer unteren Kante des Sitzes, die nach oben zurückgenommen ist, gebildet ist, und ein unteres konkaves Teil (110B), welches von der Oberseite von einer von den Seitenabdeckungen, welche nach unten zurückgenommen ist, gebildet ist, den Schlitz (120) bilden, um Luft einzulassen, wobei das Führungsteil (112) in der Körperbreitenrichtung des Motorrades weiter innen als das obere konkave Teil (100) angeordnet ist,
und dass Führungsrippen (113), welche angepasst sind, um Luft von dem Schlitz (120) zu einer Innenseite der Seitenabdeckung zu führen, an dem Führungsteil (112) gebildet sind.

2. Motorrad nach Anspruch 1, wobei ein Luftfilter (29) mit seinen beiden lateralen Seiten von den Seitenabdeckungen (71) umgeben vorgesehen ist und wobei ein Lufteinlasspfad von dem Schlitz zu einem Luftfiltereinlasskanal (29A) eine Labyrinthstruktur aufweist.

3. Motorrad nach Anspruch 2, wobei:
- der Sitz (42) eine Sitzbodenplattenbarriere (130) aufweist, welche sich von einer Bodenplatte des Sitzes nach unten erstreckt,
- der Luftfilter (29) eine Luftfiltereinlasskanaibarriere (131) aufweist, welche sich von dem Luftfilter nach oben erstreckt, und
- die Sitzbodenplattenbarriere und die Luftfiltereinlasskanalbarriere die Labyrinthstruktur bildern.

4. Motorrad nach Anspruch 3, wobei, während die Sitzbodenpiattenbarriere (130) in der Körperbreitenrichtung weiter innen als das Führungsteil angeordnet ist, die Luftfiltereinlasskanalbarriere (131) in der Körperbreitenrichtung weiter innen als die Sitzbodenplattenbarriere (130) angeordnet und so gebildet ist, um den Einlasskanal des Luftfilters zu umgeben.

## Revendications

1. Motocyclette (10) comprenant :
une structure d'orifice d'admission d'air (30) ;
un siège (42) pour qu'un occupant s'assoit dessus ;
des couvercles latéraux (71) qui sont positionnées des deux côtés latéraux de la motocyclette et sous le siège et recouvrant un corps de la motocyclette depuis l'extérieur ; et
une fente (120) pour introduire l'air ;
dans laquelle une partie de guidage (112) formée de manière solidaire avec la partie supérieure de l'un desdits couvercles latéraux, est prévue sur un côté interne de la fente ;
**caractérisée en ce qu'**une partie concave supérieure (100) qui est formée par un bord inférieur de siège évidé vers le haut et une partie concave inférieure (110B) qui est formée par ladite partie supérieure de l'un desdits couvercles latéraux évidés vers le bas, constituent ladite fente (120) pour introduire l'air, avec ladite partie de guidage (112) située davantage vers l'intérieur dans le sens de la largeur du corps de la motocyclette que la partie concave supérieure (100) ; et **en ce que**
des nervures de guidage (113) qui sont adaptées pour guider l'air à partir de la fente (120) jusqu'à un côté interne du couvercle latéral, sont formées sur la partie de guidage (112).

2. Motocyclette selon la revendication 1, dans laquelle un filtre à air (29) est prévu avec ses deux côtés latéraux entourés par les couvercles latéraux (71) et une trajectoire d'admission d'air à partir de la fente jusqu'à l'orifice d'entrée (29A) du filtre à air, a une structure en forme de labyrinthe.

3. Motocyclette selon la revendication 2, dans laquelle le siège (42) a une barrière de plaque inférieure de siège (130) s'étendant vers le bas à partir d'une plaque inférieure du siège;
le filtre à air (29) a une barrière d'orifice d'entrée de filtre à air (131) s'étendant vers le haut à partir du filtre à air ; et
une barrière de plaque inférieure de siège et une barrière d'orifice d'entrée de filtre à air constituent la forme de labyrinthe.

4. Motocyclette selon la revendication 3, dans laquelle alors que la barrière de plaque inférieure de siège (130) est positionnée davantage vers l'intérieur dans le sens de la largeur du corps que la partie de guidage, la barrière d'orifice d'entrée de filtre à air (131) est positionnée plus à l'intérieur dans le sens de la largeur du corps que la barrière de plaque inférieure de siège (130) et formée ainsi afin d'entourer l'orifice d'entrée du filtre à air.
